# EUROPÄISCHE PATENTANMELDUNG

(11) **EP 2 011 967 A1**
(43) Veröffentlichungstag der Anmeldung: **07.01.2009**
(21) Anmeldenummer: 07075575.6
(22) Anmeldetag: 06.07.2007
(51) Int. Cl.: F01D 5/08, F02C 6/12, F01D 15/10, F02C 7/268, F02B 39/10

(54) **Läuferwellenanordnung und Verfahren zur Herstellung eines solche Rotors**

(71) Anmelder: Lindenmaier AG, 88471 Laupheim (DE)
(72) Erfinder: Gödeke, Holger, 88480 Achstetten (DE); Löffler, Rudolf, 88454 Unteressendorf (DE); Heber, Ralf, 89155 Erbach-Ersingen (DE)
(74) Vertreter: Pfenning, Meinig & Partner GbR

(57) **Zusammenfassung**

Die Erfindung betrifft eine Läuferwellenanordnung für Turbolader sowie ein Verfahren zu deren Herstellung.

Die Läuferwellenanordnung enthält eine gewichtsoptimierte Läuferwelle (2), wobei die Läuferwelle zumindest mit einem Turbinenrad (3) drehfest verbunden ist. Zwischen Turbinenrad (3) und Läuferwelle (2) ist eine thermisch isolierende Buchse (4, 4') vorgesehen.

Mit der Erfindung wird der Wärmestrom zum Lagerbock und Verdichter des Turboladers hin verringert. Die Verringerung der Wärmeverluste steigern den Wirkungsgrad des Turboladers.

Da dem Abgas des Verbrennungsmotors weniger thermische Energie entzogen wird, verbessert sich das Ansprechverhalten der nachgeschalteten Abgasreinigungsanlagen (Katalysatoren, Russfilter, ... .) erheblich.

Durch die geringere thermische Belastung der Lagerkomponenten ist der Einsatz von kostengünstigeren reibungsminimierten Lagerkonzepten verwirklichbar.

## Beschreibung

Die vorliegende Erfindung betrifft eine Läuferwellenanordnung für Strömungskraftmaschinen vorzugsweise zum Einsatz in Turboladern nach Anspruch 1.

Turbolader für Verbrennungskraftmaschinen sind prinzipiell bekannt. Hierbei wird üblicherweise ein Turbinenrad von einem Abgasstrom eines Verbrennungsmotors angetrieben. Das Turbinenrad ist auf einer gemeinsamen Läuferwelle mit einem Verdichterrad auf der Lufteinlassseite des Verbrennungsmotors verbunden. Durch die herausströmenden Abgase wird das Turbinenrad angetrieben und hierdurch gleichzeitig Luft mit hohem Druck einlassseitig in den Verbrennungsmotor eingeblasen, um so dessen Leistungsfähigkeit zu erhöhen.

Problematisch hieran ist jedoch, dass aufgrund der hohen Temperaturen der Abgase Lagerungsanforderungen für die Läuferwelle sehr spezielle sind (beispielsweise der meist zwingende Einsatz hydrodynamischer Lager) und dass außerdem aufgrund der hohen Temperaturen Elektromotoren, die den Turbolader zusätzlich beschleunigen könnten, nicht bzw. nur mit großem Aufwand im Lagerbereich montiert werden könnten.

Der vorliegenden Erfindung liegt daher die Aufgabe zugrunde, einen Turbolader zu schaffen, der thermische Verluste durch den Turbolader minimiert und außerdem vielfältige Lagerungskonzepte ermöglicht.

Diese Aufgabe wird durch die Gegenstände der unabhängigen Patentansprüche gelöst.

Hierbei handelt es sich um eine Läuferwellenanordnung für Strömungskraftmaschinen, insbesondere Turbolader, enthaltend eine Läuferwelle, wobei die Läuferwelle zumindest mit einem Turbinenrad drehfest verbunden ist, und wobei zwischen Turbinenrad und Läuferwelle eine druckfeste thermisch isolierende Buchse vorgesehen ist.

Dies bedeutet, dass das Turbinenrad nicht unmittelbar auf dem Läuferwellenkörper angebracht ist, sondern dass hier zumindest bereichsweise eine thermisch isolierende Buchse (Spacer) vorgesehen ist.

Diese thermisch isolierende Buchse bewirkt, dass kein großer Wärmefluss vom Turbinenrad über die Läuferwelle in ein Lagergehäuse (hier ist die Lagerung der Läuferwelle untergebracht) entsteht. Hierdurch wird der Wirkungsgrad des Turboladers erhöht und die Lagerung ist thermisch weniger belastet, wodurch - abgesehen von der hydrodynamischen Lagerung - noch weitere Lagerungskonzepte in Frage kommen.

Außerdem sind durch die geringen Wärmeverluste auch höhere Abgastemperaturen möglich, so dass hiermit auch das Ansprechverhalten eines nachgelagerten Katalysators bzw. Russfilters (der durch die Temperatur der Abgase auf Betriebstemperatur gebracht wird) verbessert wird. Außerdem kommt auch nicht zu einer hohen Wärmeabfuhr in den Ölkreislauf des hydrodynamischen Lagers, wodurch thermische Verluste bzw. die Belastung des Öls ebenfalls verringert werden.

Außerdem wird ein Verfahren zum Herstellen eines erfindungsgemäßen Läüferwellenanordnung offenbart. Hierbei wird einerseits ein Turbinenrad mit einer thermisch isolierenden Buchse drehfest verbunden, wobei das Turbinenrad die thermisch isolierende Buchse zumindest bereichsweise radial umgibt und andererseits die Buchse mit der Läuferwelle drehfest verbunden ist, wobei die thermisch isolierende Buchse die Läuferwelle zumindest bereichsweise radial umgibt. Durch das jeweils radiale Umgeben von Turbinenrad zur thermisch isolierenden Buchse bzw. von der Buchse zur Läuferwelle, wird der Wärmefluss von der Läuferwelle (dem Wellenkörper, der üblicherweise aus Metall ist) zu dem Turbinenrad hin (welches ebenfalls üblicherweise aus Metall ist) unterbrochen bzw. stark vermindert. Vorteilhafterweise werden hier keine Metallteile großflächig aneinander angrenzen, so dass durch die thermisch Trennung hier eine Wärmeisolierung geschieht.

Vorteilhafterweise wird bei diesem Herstellvorgang zunächst die thermisch isolierende Buchse mit dem Turbinenrad verbunden, beispielsweise durch Vergießen der Buchse mit dem Turbinenrad im Feingussverfahren. Hierdurch wird die mechanische Beanspruchung der thermisch isolierende Buchse gering gehalten. Alternativ ist es auch möglich, durch Aufschrumpfen oder auch durch Formschluss eine Verbindung zwischen thermisch isolierende Buchse und Turbinenrad zu erreichen.

Anschließen kann dann die mit dem Turbinenrad verbundene thermisch isolierende Buchse mit der Läuferwelle gefügt werden, vorzugsweise durch Aufschrumpfen auf der Läuferwelle.

Mit dem Begriff "Aufschrumpfen" wird im Rahmen dieser Anmeldung verstanden, dass aufgrund Erhitzen und/oder Kühlen eines der zu fügenden Bauteile ein Übermaß zeitweise hergestellt wird, welches durch Temperaturausgleich nach dem Fügen allerdings verschwindet, so dass eine deutliche und drehfeste Verbindung zweier Bauteile (beispielsweise der thermisch isolierenden Buchse und der Läuferwelle (dem metallischen Wellenkörper)) gegeben ist. Beispielsweise ist es möglicht, dass die bereits mit dem Turbinenrad versehene Buchse erhitzt wird, so dass sich der Innendurchmesser der Buchse vergrößert, während die metallische Läuferwelle (Wellenkörper) gekühlt wird oder bei Raumtemperatur verbleibt, dann die thermisch isolierende Buchse auf die Läuferwelle gefügt wird und es schließlich zu einem Temperaturausgleich und somit einem festen Sitz der thermisch isolierende Buchse auf der Läuferwelle kommt.

Die Fügung des Turbinenrades mittels einer zwischengelagerten thermisch isolierender Buchse, die in einer Bohrung des Turbinenrades angebracht ist, hat außerdem den Vorteil, dass das Turbinenrad bezüglich der Läuferwelle gut zentriert ist. Bei den sonst üblichen Schweißverfahren zwischen einem Turbinenrad und einer Läuferwelle kann es (insbesondere wenn nur eine stirnseitige Berührung von Turbinenrad und Läuferwelle gegeben ist) zu Problem bei der Zentrierung kommen, beispielsweise auch durch thermische Inhomogenitäten beim Laserschweißen bzw. Elektronenstrahlschweißen.

Insbesondere bei der hier gezeigten Herstellmethode ist das Fügen auch mit einfachen Mitteln möglich, da nicht, wie bei einigen Schweißvorgängen, eine Vakuumumgebung erforderlich ist.

Vorteilhafte Weiterbildungen des erfindungsgemäßen Turboladers werden in abhängigen Ansprüchen angegeben. Eine vorteilhafte Weiterbildung sieht vor, dass die thermisch isolierende Buchse becherförmig oder hülsenförmig ausgeführt ist. Bei einer becherförmigen Ausführung wird die Läuferwelle in das offene Ende des Bechers gesteckt und somit ist eine stirnseitige Isolierung der Läuferwelle zu dem Turbinenrad ebenfalls hin gegeben. Alternativ sind auch hülsenförmige Ausführungen möglich, bei denen die thermisch isolierende Buchse beidseitig offen ist, hier sind gegebenenfalls jedoch weitere Maßnahmen zum verstärkten Wärmefluss von der Läuferwelle zum Turbinenrad hin vorzusehen

Die thermisch isolierende Buchse ist vorzugsweise aus keramischem Material, besonders vorzugsweise aus sonderkeramischen Werkstoff. Insbesondere kommt hier PSZ (Partly Stabilized Circoniumoxid) infrage. Dies ist ein "teilstabilisiertes Zirkoniumoxid, das per Sintertechnik hergestellt wird. Der Vorteil dieses Werkstoffs ist, dass bei der starken thermischen Belastung beim Aufschrumpfen bzw. auch auf Zugbelastungen hin, dieses Material stabil verarbeitbar ist.

Vorzugsweise hat das Material der thermisch isolierenden Buchse gegenüber der Läuferwelle und/oder dem Turbinenrad sehr gute wärmeisolierende Eigenschaften, hierbei sollte der Wärmeleitleitfähigkeit höchstens 4 W/mk, vorzugsweise höchstens 2,0 W/mK, d.h. ca 1/10 der Läuferwelle betragen [

Eine weitere vorteilhafte Weiterbildung sieht vor, dass zwischen der thermisch isolierenden Buchse und dem Turbinenrad ein Luftpolster vorgesehen ist. Hierdurch wird der stirnseitige Wärmefluß vom Turbinenrad in die Läuferwlle nochmals reduziert.

Prinzipiell kann die thermisch isolierende Buchse verschiedene Querschnittsformen aufweisen, hier kommen aber zylindrische bzw. kegelförmigen Ausführungen besonders vorzugsweise zum Einsatz.

Das Turbinenrad selbst wird vorzugsweise aus einem metallischen Material im Feinguss hergestellt (beispielsweise aus IN 713 LC). Eine Läuferwelle kann beispielsweise aus 16 MnCr 5) gebildet sein.

Vorzugsweise ist außerdem noch eine "Thermoscheibe", also ein thermisches Schutzschild zum Wärmeisolieren des Turbinenrades auf der dem Turbinenrad abgewandten Seite der thermisch isolierende Buchse vorzusehen.

Hierdurch kann der Wärmefluss von dem Turbinenrad (nämlich der Turbinenradrückseite, die keine Beschaufelung aufweist, jedoch trotzdem Wärme in großem Maße abstrahlt) vermindert werden.

Diese Scheibe ist vorzugsweise an einem feststehenden Bauteil (beispielsweise einem Lagergehäuse) angebracht.

Eine weitere vorteilhafte Ausbildung sieht vor, dass die Läuferwelle nicht als Vollwelle, sondern als Hohlwelle ausgeführt ist. Hierzu sei vermerkt, dass die Anwendung der Hohlwelle nicht allein auf erfindungsgemäße thermisch isolierende Buchsen beschränkt ist, sondern dass solche Hohlwellen auch bei üblichen Turboladern (beispielsweise bei denen das Turbinenrad mittels Laserstrahl an einer Welle verschweißt ist) möglich ist.

Die Hohlwelle hat zunächst einmal den Vorteil, dass gegenüber der Vollwelle weniger bewegte Masse bzw. niedrigere Massenträgheitsmomente festzustellen sind. Hierdurch kommt zunächst einmal zur Reduzierung des Wärmeflusses, also einem Erhöhen des Wirkungsgrades. Außerdem ist eine Gewichtseinsparung festzustellen. Durch die Verringerung des Massenträgheitsmoments wird außerdem das Ansprechverhalten des Turboladers beim Lastwechsel verbessert.

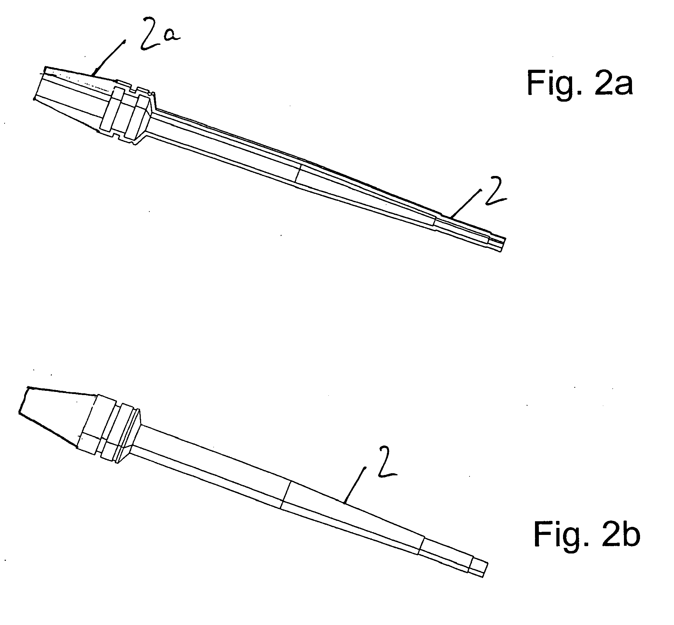

Die erfindungsgemäße Hohlwelle kann innen und/oder außen profiliert sein. Das Fertigungsverfahren für die Hohlwelle kann beispielsweise vorsehen, dass das Rohr in einem Rundknetverfahren geformt und geschliffen wird. Hierdurch ergibt sich (wie Fig. 2b später zeigt) auch eine innere Profilierung des Rohres. Eine andere Möglichkeit besteht darin, das Rohrvollprofil zu schleifen bzw. ein Vollmaterial außen zu überdrehen und/oder zu schleifen und dann anschließend eine Innenbohrung durch Tieflochbohren herzustellen.

Die Läuferwelle (hierbei kann es sich um eine Vollwelle oder eine Hohlwelle handeln) weist erfindungsgemäß vorzugsweise ein kegelförmiges oder zylindrisches Ende zum Fügen der thermisch isolierende Buchse auf.

Bei der erfindungsgemäßen Läuferwellenanordnung handelt es sich gegebenenfalls um ein Bauteil eines Turboladers mit konventionellem Aufbau, wie dies bereits einleitend geschildert wurde. Dieser sieht auf der Läuferwelle außerdem ein drehfest befestigtes Verdichterrad vor, das Verdichterrad wird vorzugsweise mittels einer Mutter (also einer Schraubverbindung) auf der Läuferwelle gesichert. Hierdurch ist die Montierbarkeit bzw. Demontierbarkeit des Systems gegeben.

Ein besonderer Vorzug der vorliegenden Erfindung besteht darin, dass die Läuferwellenanordnung ein Lager aufweist, das als hydrodynamisches Lager, als Wälzlager, als Luftlager oder als Magnetlager ausgeführt sein kann. Aufgrund des verringerten Wärmestroms vom Turbinenrad zum Lager hin ist es möglich, dass dieses beispielsweise als Wälzlager ausgeführt wird. Hierdurch kann auf Standardbauteile zurückgegriffen werden, der Reibwiderstand ist über sämtliche Betriebszustände hinweg relativ gering und auch nachgehende thermische Verluste durch das für die Schmierung des hydrodynamischen Lagers notwendige Öl entfallen.

Das Lager ist hierbei vorzugsweise von einem Lagergehäuse umgeben, das einerseits das Lager umgibt und andererseits der Wärmeisolierung dient. Hierbei kann die bereits oben angesprochene Scheibe zum Wärmeisolieren des Turbinenrades auch am Lagergehäuse befestigt sein.

Eine besonders vorteilhafte Ausführungsform sieht vor, dass die Läuferwellenanordnung mit einem Elektromotor und/oder einem Elektrogenerator verbunden ist. Hierdurch kann durch den Elektromotor eine Beschleunigung der Läuferwellenanordnung erreicht werden, wenn kurzfristige Leistungsanforderungen von dem mechanischen Turbolader selbst nicht geleistet werden können bzw. kann bei einem verringerten Frischluftbedarf durch den Elektrogenerator Rotationsenergie in elektrische Energie umgewandelt und nachfolgend gespeichert werden. Der Elektromotor ist hierbei im Lagergehäuse selbst untergebracht oder zwischen Lagergehäuse und Verdichterrad bzw. sogar zwischen Lagergehäuse und Turbinenrad. Eine solche Anbringung wird durch die verbesserte thermische Isolation zum Turbinenrad hin erst möglich.

Wichtig bei der vorliegenden Erfindung ist die thermische Trennung des Turbinenrades von übrigen Komponenten, vor allem der Läuferwelle (auf der das Turbinenrad angebracht ist). Die hierzu vorgesehene thermisch isolierende Buchse (auch Spacer genannt) zeichnet sich hierbei neben der geringen Wärmeleitfähigkeit durch eine hohe thermische Beständigkeit, eine hohe Warmfestigkeit, hohe Druck-und Biegefestigkeit sowie eine hohe Bruchzähigkeit aus. Da der Spacer hierbei auch noch eine um ca. 30% geringere Dichte als das Turbinenrad besitzt, wird das Gewicht des Turbinenrades weiter reduziert, so dass eine weitere Verbesserung des Ansprechverhaltens des Turboladers gegeben ist.

Weitere vorteilhafte Weiterbildungen der vorliegenden Erfindung werden in den übrigen abhängigen Ansprüchen angegeben.

Die Erfindung wird anhand mehrerer Figuren erläutert. Es zeigen:
- Fig. 1: ein Beispiel eines erfindungsgemäßen Turboladers im Teilschnitt,
- Fign. 2a und 2b: eine Läuferwelle,
- Fig. 3: eine Läuferwellenanordnung mit Turbinenrad sowie Verdichterrad,
- Fig. 4a: einen Schnitt durch eine Anordnung gemäß Fig. 3,
- Fig. 4b: eine Explosionszeichnung gemäß einer Anordnung nach Fig. 3,
- Fig. 5: eine Explosionszeichnung einer alternativen Ausführungsform der in Fig. 3 gezeigten Anordnung.

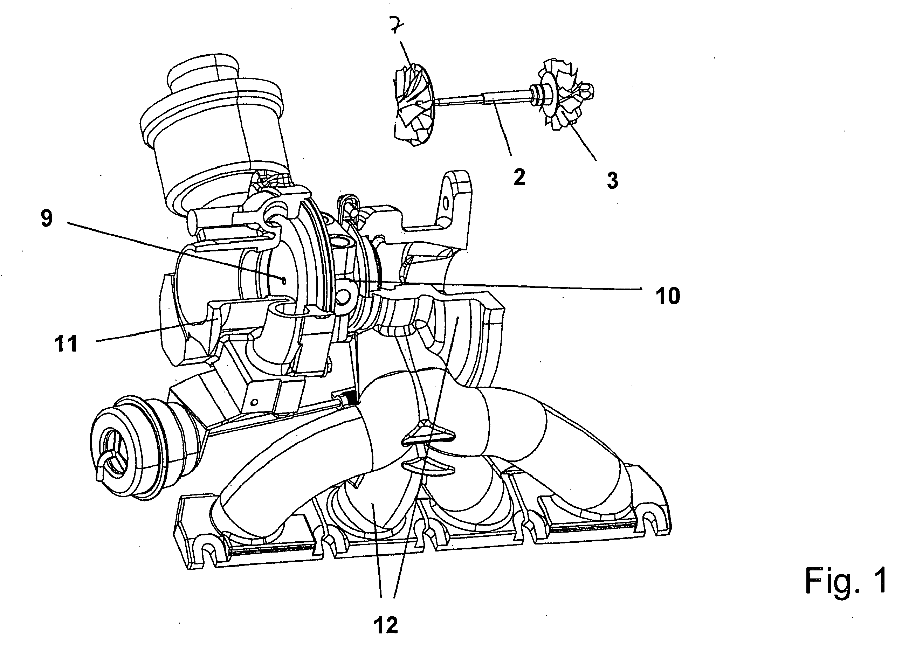

Fig. 1 zeigt einen Turbolader 1.

Dieser Turbolader weist ein Turbinengehäuse 12 auf. Dieses Turbinengehäuse hat einen Auslasskrümmer, der an einen Verbrennungsmotor montierbar ist. Innerhalb des Turbinengehäuses werden außerdem die zusammengeführten Gase eingeleitet, um somit ein Turbinenrad 3 anzutreiben. Das Turbinenrad 3 ist gemeinsam mit einem Verdichterrad 7 auf einer Läuferwelle 2 gelagert. Als Lager dient ein Lager 9, das innerhalb eines Lagergehäuses 10 angebracht ist. Außerdem ist ein Verdichtergehäuse 11 vorgesehen, in welches Frischluft mittels des Verdichterrades 7 angesaugt und komprimiert wird und dann (auf die hier nicht dargestellte Weise) in den Verbrennungsmotor gepresst wird.

Zur besseren Veranschaulichung sind das Verdichtergehäuse 11 sowie das Turbinengehäuse 12 teilweise geschnitten, die Läuferwelle 2 mit dem Verdichterrad 7 bzw. dem Turbinenrad 3 ist vereinzelt dargestellt.

Der Turbolader gemäß Fig. 1 kann auch einen Elektromotor bzw. einen Elektrogenerator enthalten. Diese sind mit der Läuferwelle 2 verbunden und der Elektromotor und/oder der Elektrogenerator sind hierbei im Lagergehäuse 10 oder zwischen Lagergehäuse 10 und Verdichterrad 7 oder zwischen Lagergehäuse 10 und Turbinenrad 3 angebracht.

Fign. 2a und 2b zeigen eine Läuferwelle 2.

Hierbei zeigt Fig. 2a eine Außenansicht der Läuferwelle und Fig. 2b einen Querschnitt. Hierdurch wird klar, dass es sich um eine Hohlwelle handelt, wobei diese Hohlwelle sowohl innen als auch außen profiliert ist, die Hohlwelle wurde in einem Rundknetprozess mit anschließendem Schleifen hergestellt. Die in Fig. 2a und 2b gezeigte linksseitig ein konisches Ende 2a zum Fügen einer konischen thermisch isolierende Buchse bzw. einer entsprechenden Bohrung eines Turbinenrades 3.

Rechtsseitig ist ein Verdichterrad 7 montierbar, das durch eine hier nicht dargestellte Mutter gesichert werden kann.

Alternativ zu dem zylindrischen Ende zum Fügen der thermisch isolierende Buchse bzw. des Turbinenrades kann hier auch ein sich zum Ende hin verjüngender Kegel zur besseren Zentrierung vorgesehen sein.

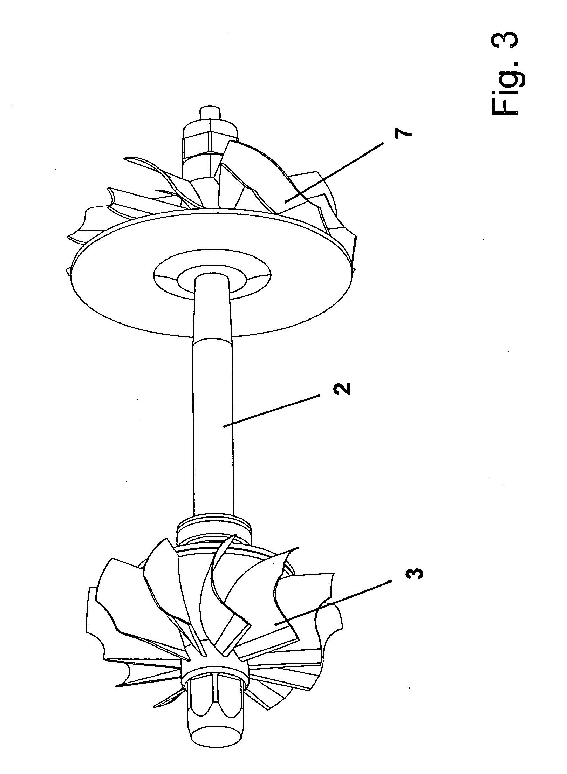

Fig. 3 zeigt nochmals eine vergrößerte Darstellung einer Läuferwellenanordnung, also der Läuferwelle 2 mit montiertem Turbinenrad 3 bzw. Verdichterrad 7.

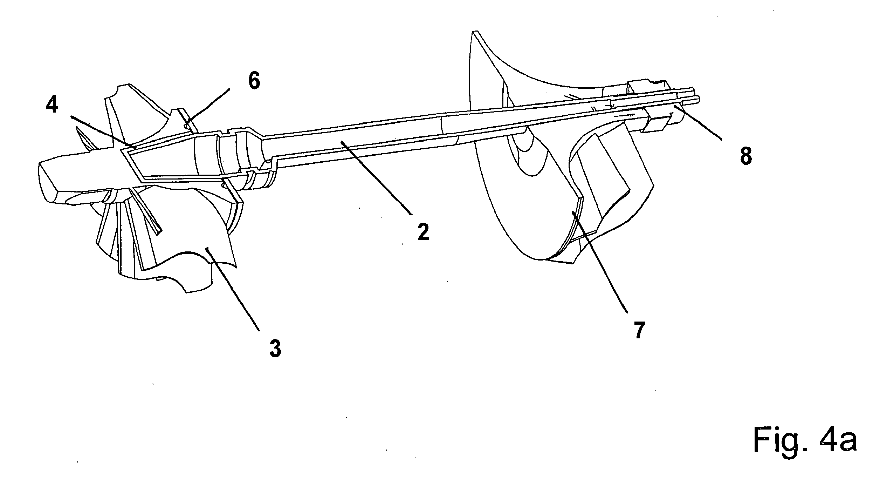

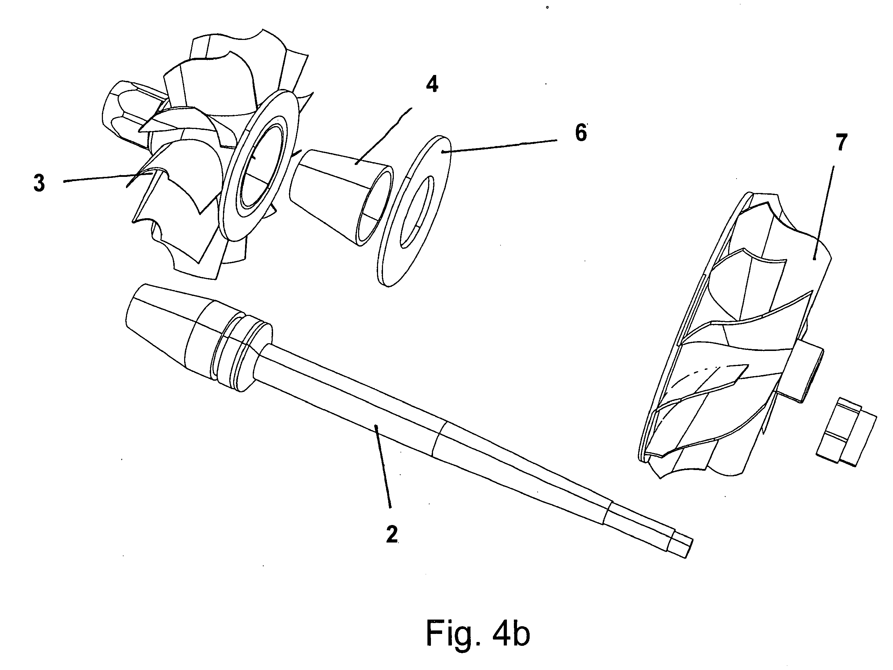

Details hierzu werden nachfolgend anhand von Fign. 4a und 4b erklärt.

Fign. 4a und 4b zeigen das Turbinenrad 3, das mit einer thermisch isolierenden Buchse 4 vergossen ist. Diese Buchse 4 wiederum ist auf dem kegelstumpfförmigen Ende der Läuferwelle 2 aufgeschrumpft. Eine Thermoscheibe 6 ist vorgesehen, um den Wärmestrom von der Turbinenradrückseite zu dem Lagergehäuse 10 hin zu vermindern. Auf der abgewandten Seite der Läuferwelle 2 ist ein Verdichterrad 7 mittels eines sich zum Ende hin verjüngenden Kegels und einer Schraubverbindung befestigt.

Gezeigt ist also (in Verbindung mit Fig. 1) eine Strömungskraftmaschine, z. B. Turbolader 1, enthaltend eine Läuferwellenanordnung mit Läuferwelle 2, wobei die Läuferwelle zumindest mit dem Turbinenrad 3 drehfest verbunden ist und wobei zwischen Turbinenrad 3 und Läuferwelle 2 eine thermisch isolierende Buchse 4 vorgesehen ist. Die Buchse ist hierbei becherförmig gestaltet, um auch an der Stirnseite der Läuferwelle den Wärmestrom von dem Turbinenrad zu unterbrechen.

Die thermisch isolierende Buchse 4 ist, wie einleitend beschrieben, aus einem teilstabilisierten Zirkoniumoxid, das per Sintertechnik hergestellt wurde, prinzipiell sind allerdings auch andere Materialien wie z.B. Aluminiumtitanat ATI oder reaktionsgebundens Siliziumnitrid RBSN möglich, welche wärmeisolierende Eigenschaften haben gegenüber den benachbarten Bauteilen. Die kegelige Form der thermisch isolierenden Buchse 4 bewirkt eine Selbstzentrierung des Turbinenrades 3 bzw. des Wellenendes 2a. Vorliegend ist das Turbinenrad 3 aus einem metallischen Material, alternativ ist allerdings auch ein keramisches Material möglich. Die Läuferwelle 2 wird mittels eines Lagers 9, das als Wälzlager, alternativ auch als hydrodynamisches Lager, Luftlager oder Magnetlager ausgeführt ist, gehalten (Lager nicht explizit dargestellt).

Die Schraubverbindung 8 in Fig. 4a ist mittels einer Mutter verwirklicht, hier sind auch alternative Ausführungsformen möglich, jedoch ist die Demontierbarkeit des Verdichterrades 7 erwünscht, um die Montage bzw. Demontage zu ermöglichen bzw. zu erleichtern.

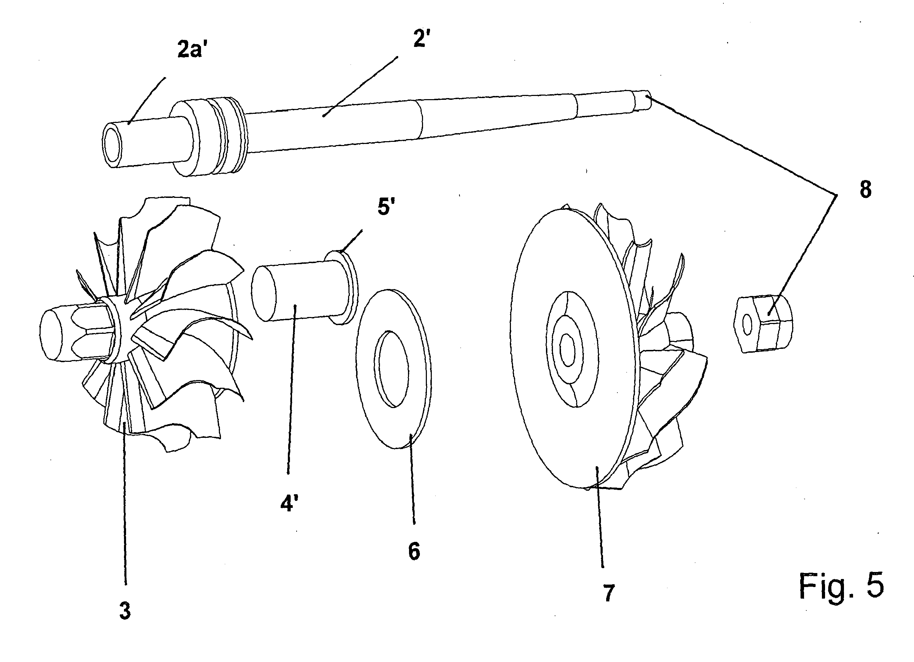

Fig. 5 zeigt ein weiteres Ausführungsbeispiel einer erfindungsgemäßen Wellenanordnung. Im Unterschied zu der in Fig. 4a und 4b bereits ausführlich beschriebenen Ausführungsform ist hier jedoch eine thermisch isolierende Buchse 4 mit zylindrischem Querschnitt zu sehen, diese thermisch isolierende Buchse 4' weist außerdem einen Anschlag 5 auf als Anschlag für das Turbinenrad 3. Korrespondierend hierzu weist die Läuferwelle 2' ein zylindrisches Ende 2a' auf, auf das die zylindrische Läuferwelle 4' fügbar ist.

Die in den Fign. 4a, 4b sowie 5 gezeigten Wellenanordnungen wurden dadurch hergestellt, dass zunächst ein Turbinenrad 3 mit einer thermisch isolierenden Buchse 4 bzw. 4' drehfest verbunden wurde, wobei das Turbinenrad 3 die thermisch isolierende Buchse zumindest bereichsweise radial umgibt und andererseits die Buchse mit der Läuferwelle 2 drehfest verbunden wird, wobei die thermisch isolierende Buchse die Läuferwelle wie gezeigt zumindest bereichsweise radial umgibt.

Hierbei wurde zunächst einmal die thermisch isolierende Buchse (z.B. Buchse 4) mit dem Turbinenrad 3 vergossen und anschließend die thermisch isolierende Buchse auf das Wellenende 2a aufgeschrumpft.

## Patentansprüche

1. Läuferwellenanordnung (2) für Strömungskraftmaschinen wie einem Turbolader (1) oder dergleichen, wobei eine Läuferwelle zumindest mit einem Turbinenrad (3) drehfest verbunden ist,
**dadurch gekennzeichnet , dass** zwischen Turbinenrad (3) und Läuferwelle (2) eine thermisch isolierende Büchse (4, 4') vorgesehen ist.

2. Läuferwellenanordnung nach Anspruch 1, **dadurch gekennzeichnet, dass** die thermisch isolierende Buchse (4, 4') becherförmig oder hülsenförmig ist.

3. Läuferwellenanordnung nach einem der vorhergehenden Ansprüche, **dadurch gekennzeichnet, dass** die thermisch isolierende Buchse (4, 4') aus keramischem Material, vorzugsweise aus sonderkeramischen Werkstoff ist.

4. Läuferwellenanordnung nach einem der vorhergehenden Ansprüche, **dadurch gekennzeichnet, dass** das Material der thermisch isolierende Buchse (4, 4') gegenüber der Läuferwelle (2) und/oder dem Turbinenrad (3) wärmeisolierende Eigenschaften hat, nämlich der Wärmeleitfähigkeit höchstens 4 W/mK, vorzugsweise höchstens 2 W/mk, beträgt.

5. Läuferwellenanordnung nach einem der vorhergehenden Ansprüche, **dadurch gekennzeichnet, dass** die thermisch isolierende Buchse (4, 4') einen axialen Anschlag (5) für das Turbinenrad (3) aufweist und/oder zwischen dem Turbinenrad und der Läuferwelle stirnseitig ein Luftpolster zur Isolierung gebildet wird.

6. Läuferwellenanordnung nach einem der vorhergehenden Ansprüche, **dadurch gekennzeichnet, dass** die thermisch isolierende Buchse (4, 4') einen kegelförmigen (4) oder zylindrischen (4') Querschnitt aufweist.

7. Läuferwellenanordnung nach einem der vorhergehenden Ansprüche, **dadurch gekennzeichnet, dass** das Turbinenrad (3) aus Metall oder keramischem Material ist.

8. Läuferwellenanordnung nach einem der vorhergehenden Ansprüche, **dadurch gekennzeichnet, dass** eine Scheibe (6) zum Wärmeisolieren des Turbinenrades (3) auf der dem Turbinenrad abgewandten Seite der thermisch isolierenden Buchse (4, 4') vorgesehen ist.

9. Läuferwellenanordnung nach einem der vorhergehenden Ansprüche, **dadurch gekennzeichnet, dass** die Läuferwelle (2) eine Hohlwelle ist.

10. Läuferwellenanordnung nach Anspruch 9, **dadurch gekennzeichnet, dass** die Läuferwelle eine Hohlwelle ist und innen und/oder außen profiliert ist.

11. Läuferwellenanordnung nach einem der vorhergehenden Ansprüche, **dadurch gekennzeichnet, dass** die Läuferwelle (2) ein kegelförmiges oder zylindrisches Ende (2a, 2a') zum Fügen der thermisch isolierenden Buchse (4, 4') aufweist.

12. Läuferwellenanordnung nach einem der vorhergehenden Ansprüche, **dadurch gekennzeichnet, dass** zusätzlich ein Verdichterrad (7) auf der Läuferwelle (2) vorgesehen ist.

13. Läuferwellenanordnung nach Anspruch 12, **dadurch gekennzeichnet, dass** das Verdichterrad (7) mittels einer Schraubverbindung (8) auf der Läuferwelle (2) gesichert ist.

14. Strömungskraftmaschine, insbesondere Turbolader (1), enthaltend eine Läuferwellenanordnung nach einem der vorhergehenden Ansprüche, **dadurch gekennzeichnet, dass** die Strömungskraftmaschine ein Lager (9) aufweist, das als hydrodynamisches Lager, als Wälzlager, als Luftlager oder als Magnetlager ausgeführt ist.

15. Strömungskraftmaschine nach Anspruch 14, **dadurch gekennzeichnet, dass** das Lager von einem Lagergehäuse (10) umgeben ist.

16. Strömungskraftmaschine nach Anspruch 15 in Verbindung mit Anspruch 8, **dadurch gekennzeichnet, dass** die Scheibe zum Wärmeisolieren des Turbinenrades (3) am Lagergehäuse (10) befestigt ist.

17. Strömungskraftmaschine nach einem der vorhergehenden Ansprüche, **dadurch gekennzeichnet, dass** die Läuferwelle (2) mit einem Elektromotor und/oder einem Elektrogenerator verbunden ist.

18. Strömungskraftmaschine nach Anspruch 17 in Verbindung mit Anspruch 16 sowie Anspruch 12, **dadurch gekennzeichnet, dass** der Elektromotor und/oder Elektrogenerator im Lagergehäuse (10) oder zwischen Lagergehäuse und Verdichterrad (7) oder zwischen Lagergehäuse und Turbinenrad (3) angebracht ist.

19. Verfahren zum Herstellen einer Läuferwellenanordnung einer Strömungskraftmaschine, insbesondere eines Turboladers nach einem der vorhergehenden Ansprüche, **dadurch gekennzeichnet, dass** einerseits ein Turbinenrad (3) mit einer thermisch isolierenden Buchse (4, 4') drehfest verbunden wird, wobei das Turbinenrad (3) die Buchse (4, 4') zumindest bereichsweise radial umgibt und andererseits die thermisch isolierende Buchse mit der Läuferwelle (2) drehfest verbunden wird, wobei die Buchse die Läuferwelle zumindest bereichsweise radial umgibt.

20. Verfahren nach Anspruch 19, **dadurch gekennzeichnet, dass** zunächst die thermisch isolierende Buchse (4, 4') mit dem Turbinenrad (3) durch Vergießen oder Aufschrumpfen verbunden wird und anschließend die Buchse mit der Läuferwelle durch Aufschrumpfen verbunden wird.
